# EUROPEAN PATENT APPLICATION

(11) **EP 4 254 971 A1**
(43) Date of publication of application: **04.10.2023**
(21) Application number: 23165948.3
(22) Date of filing: 31.03.2023
(51) Int. Cl.: H04N 21/439, H04N 21/436, H04N 21/81, G10L 19/008, H04S 3/00, H04N 21/4363

(54) **MULTICHANNEL COMPRESSED AUDIO TRANSMISSION TO SATELLITE PLAYBACK DEVICES**

(30) Priority: 01.04.2022 US 202263362365 P
(71) Applicant: Sonos Inc., Santa Barbara, CA 93101 (US)
(72) Inventor: JEYARAM, Govind, Seattle (US)
(74) Representative: EIP

(57) **Abstract**

Disclosed herein are computing devices, including audio playback devices, that are configured to coordinate playback of multichannel audio across a plurality of devices. A primary playback device receives an audio an audio input stream comprising a plurality of input channels and generates first and second audio streams comprising first and second subsets, respectively, of the input channels. The primary playback device compresses the first and second audio streams and transmits them wirelessly to first and second satellite playback devices, respectively.

## Description

### FIELD OF THE DISCLOSURE

The present disclosure is related to consumer goods and, more particularly, to methods, systems, products, features, services, and other elements directed to media playback or some aspect thereof.

### BACKGROUND

Options for accessing and listening to digital audio in an out-loud setting were limited until in 2002, when SONOS, Inc. began development of a new type of playback system. Sonos then filed one of its first patent applications in 2003, entitled "Method for Synchronizing Audio Playback between Multiple Networked Devices," and began offering its first media playback systems for sale in 2005. The Sonos Wireless Home Sound System enables people to experience music from many sources via one or more networked playback devices. Through a software control application installed on a controller (e.g., smartphone, tablet, computer, voice input device), one can play what she wants in any room having a networked playback device. Media content (e.g., songs, podcasts, video sound) can be streamed to playback devices such that each room with a playback device can play back corresponding different media content. In addition, rooms can be grouped together for synchronous playback of the same media content, and/or the same media content can be heard in all rooms synchronously.

### BRIEF DESCRIPTION OF THE DRAWINGS

Features, embodiments, examples, and advantages of the presently disclosed technology may be better understood with regard to the following description, appended claims, and accompanying drawings, as listed below. A person skilled in the relevant art will understand that the features shown in the drawings are for purposes of illustrations, and variations, including different and/or additional features and arrangements thereof, are possible.
Figure 1A is a partial cutaway view of an environment having a media playback system configured in accordance with examples of the disclosed technology.
Figure 1B is a schematic diagram of the media playback system of Figure 1A and one or more networks.
Figure 1C is a block diagram of a playback device.
Figure 1D is a block diagram of a playback device.
Figure 1E is a block diagram of a network microphone device.
Figure 1F is a block diagram of a network microphone device.
Figure 1G is a block diagram of a playback device.
Figure 1H is a partially schematic diagram of a control device.
Figure 2A is a front isometric view of a playback device configured in accordance with examples of the disclosed technology.
Figure 2B is a front isometric view of the playback device of Figure 2A without a grille.
Figure 2C is an exploded view of the playback device of Figure 2A.
Figures 3A and 3B are partially schematic isometric views of an audio playback device configured in accordance with examples of the disclosed technology.
Figure 4 is a schematic block diagram of a media playback system including a primary playback device and a plurality of satellite playback devices in accordance with examples of the disclosed technology.
Figures 5-7 are schematic overhead views of an audio playback device bonded to one or more other audio playback devices, configured in accordance with examples of the disclosed technology.
Figure 8 is a flow diagram of an example routine for wireless transmission of multichannel compressed audio content to satellite playback devices in accordance with examples of the disclosed technology.

The drawings are for the purpose of illustrating examples, but those of ordinary skill in the art will understand that the technology disclosed herein is not limited to the arrangements and/or instrumentality shown in the drawings.

### DETAILED DESCRIPTION

### I. Overview

In conventional home-theatre arrangements, a primary audio playback device such as a soundbar may play back multichannel audio while satellite playback devices each play back a respective single audio channel. For instance, in a conventional 5.1 setup including a soundbar, subwoofer, and rear satellites, the soundbar may play back left, right, and center channel audio, while the left satellite plays back left rear channel audio, the right satellite plays back right rear channel audio, and the subwoofer plays back the low frequency effects (LFE) channel audio. In operation, the soundbar may receive the multichannel audio and transmit the appropriate single channel audio to the respective satellite devices (e.g., transmitting only the left rear channel audio to the left satellite playback device, and transmitting only the right rear channel audio to the right satellite playback device).

Spatial audio formats (e.g., Dolby Atmos, DTS:X) allow for a greater number of input channels with individual channels capable of outputting more than one audio channel. Using such formats, a home theatre arrangement could include, for example, a soundbar (or other primary playback device) and four or more satellite playback devices that are each capable of outputting four individual audio channels (e.g., left, right, center, and vertical). This arrangement would necessitate 16 data channels transmitted from the soundbar.

Modern wireless environments are very congested with network traffic and supporting even 3 channels can be challenging, let alone 16 or more. To address these and other problems, examples of the present technology provide a media playback system in which a primary audio playback device receives a stream of multichannel audio input from an audio source, then generates compressed multichannel audio streams for each of a plurality of satellite playback devices. The primary audio playback device can transmit these compressed multichannel audio streams to the respective satellite playback devices, which in turn decompress the multichannel audio streams and play back the audio in synchrony with the primary audio playback device. In various examples, the primary playback device may generate the respective compressed multichannel audio streams using different compression schemes (e.g., more or less lossy, variations in compression power, use of different compression algorithms such as spatial audio encoding, perceptual encoding, etc.). The particular compression scheme utilized can be adjusted based on one or more input parameters, such as psychoacoustic analysis of the audio content, spatial information, user location, device location (e.g., relative to a user or to other devices), device placement (e.g., relative to a wall or other features of the environment), room acoustics, network conditions, or any other suitable input parameters. By generating separate compressed data streams to deliver multichannel audio to satellite playback devices, the system can deliver rich, immersive audio experiences even when network congestion places practical limits on data transmission between the various playback devices.

While some examples described herein may refer to functions performed by given actors such as "users," "listeners," and/or other entities, it should be understood that this is for purposes of explanation only. The claims should not be interpreted to require action by any such example actor unless explicitly required by the language of the claims themselves.

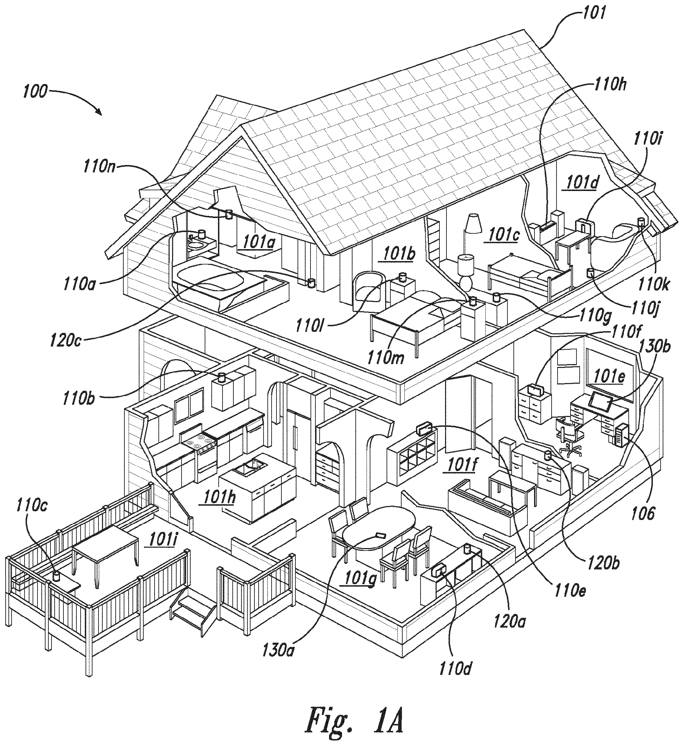

In the Figures, identical reference numbers identify generally similar, and/or identical, elements. To facilitate the discussion of any particular element, the most significant digit or digits of a reference number refers to the Figure in which that element is first introduced. For example, element 110a is first introduced and discussed with reference to Figure 1A. Many of the details, dimensions, angles and other features shown in the Figures are merely illustrative of particular examples of the disclosed technology. Accordingly, other examples can have other details, dimensions, angles and features. In addition, those of ordinary skill in the art will appreciate that further examples of the various disclosed technologies can be practiced without several of the details described below.

### II. Suitable Operating Environment

Figure 1A is a partial cutaway view of a media playback system 100 distributed in an environment 101 (e.g., a house). The media playback system 100 comprises one or more playback devices 110 (identified individually as playback devices 110a-n), one or more network microphone devices ("NMDs"), 120 (identified individually as NMDs 120a-c), and one or more control devices 130 (identified individually as control devices 130a and 130b).

As used herein the term "playback device" can generally refer to a network device configured to receive, process, and output data of a media playback system. For example, a playback device can be a network device that receives and processes audio content. In some examples, a playback device includes one or more transducers or speakers powered by one or more amplifiers. In other examples, however, a playback device includes one of (or neither of) the speaker and the amplifier. For instance, a playback device can comprise one or more amplifiers configured to drive one or more speakers external to the playback device via a corresponding wire or cable.

Moreover, as used herein the term NMD (i.e., a "network microphone device") can generally refer to a network device that is configured for audio detection. In some examples, an NMD is a stand-alone device configured primarily for audio detection. In other examples, an NMD is incorporated into a playback device (or vice versa).

The term "control device" can generally refer to a network device configured to perform functions relevant to facilitating user access, control, and/or configuration of the media playback system 100.

Each of the playback devices 110 is configured to receive audio signals or data from one or more media sources (e.g., one or more remote servers, one or more local devices) and play back the received audio signals or data as sound. The one or more NMDs 120 are configured to receive spoken word commands, and the one or more control devices 130 are configured to receive user input. In response to the received spoken word commands and/or user input, the media playback system 100 can play back audio via one or more of the playback devices 110. In certain examples, the playback devices 110 are configured to commence playback of media content in response to a trigger. For instance, one or more of the playback devices 110 can be configured to play back a morning playlist upon detection of an associated trigger condition (e.g., presence of a user in a kitchen, detection of a coffee machine operation). In some examples, for example, the media playback system 100 is configured to play back audio from a first playback device (e.g., the playback device 110a) in synchrony with a second playback device (e.g., the playback device 110b). Interactions between the playback devices 110, NMDs 120, and/or control devices 130 of the media playback system 100 configured in accordance with the various examples of the disclosure are described in greater detail below.

In the illustrated example of Figure 1A, the environment 101 comprises a household having several rooms, spaces, and/or playback zones, including (clockwise from upper left) a master bathroom 101a, a master bedroom 101b, a second bedroom 101c, a family room or den 101d, an office 101e, a living room 101f, a dining room 101g, a kitchen 101h, and an outdoor patio 101i. While certain embodiments and examples are described below in the context of a home environment, the technologies described herein may be implemented in other types of environments. In some examples, the media playback system 100 can be implemented in one or more commercial settings (e.g., a restaurant, mall, airport, hotel, a retail or other store), one or more vehicles (e.g., a sports utility vehicle, bus, car, a ship, a boat, an airplane), multiple environments (e.g., a combination of home and vehicle environments), and/or another suitable environment where multi-zone audio may be desirable.

The media playback system 100 can comprise one or more playback zones, some of which may correspond to the rooms in the environment 101. The media playback system 100 can be established with one or more playback zones, after which additional zones may be added, or removed to form, for example, the configuration shown in Figure 1A. Each zone may be given a name according to a different room or space such as the office 101e, master bathroom 101a, master bedroom 101b, the second bedroom 101c, kitchen 101h, dining room 101g, living room 101f, and/or the outdoor patio 101i. In some examples, a single playback zone may include multiple rooms or spaces. In certain examples, a single room or space may include multiple playback zones.

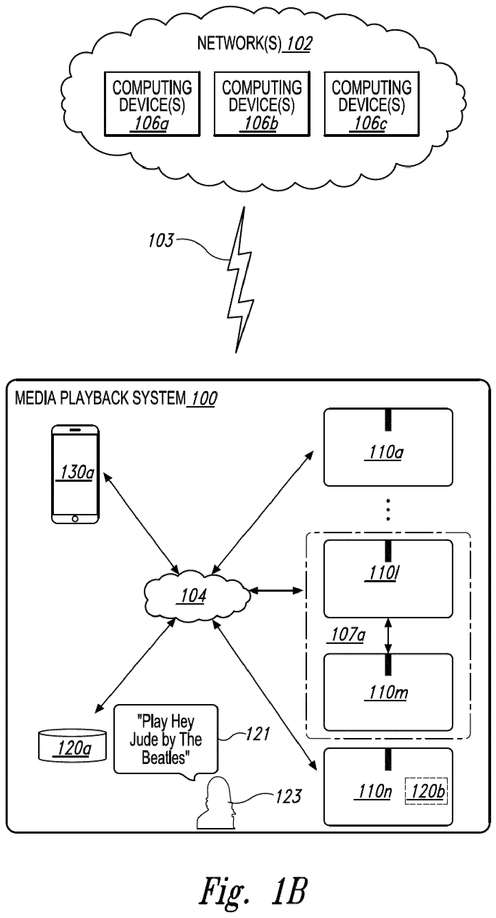

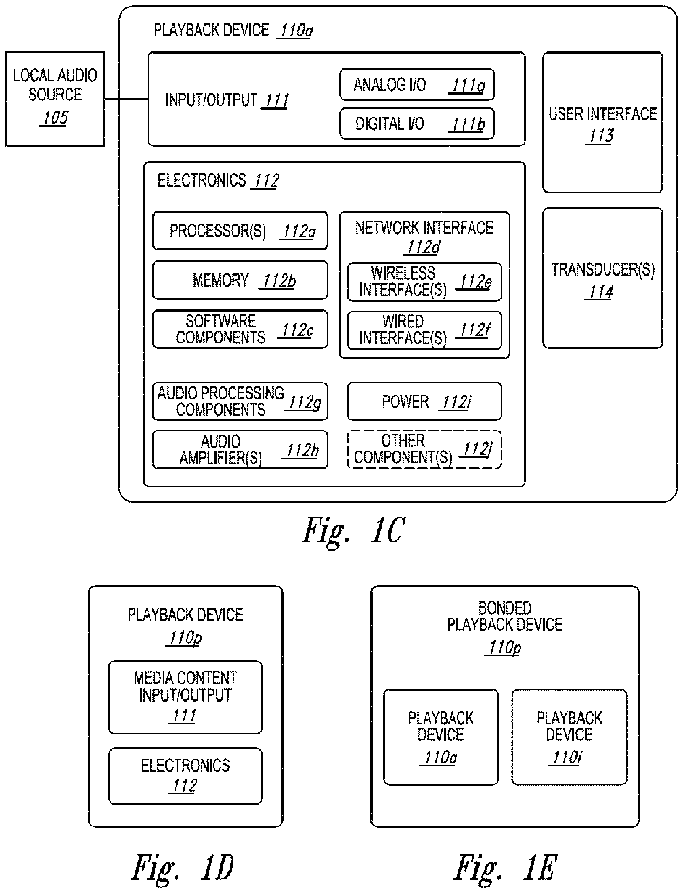

In the illustrated example of Figure 1A, the master bathroom 101a, the second bedroom 101c, the office 101e, the living room 101f, the dining room 101g, the kitchen 101h, and the outdoor patio 101i each include one playback device 110, and the master bedroom 101b and the den 101d include a plurality of playback devices 110. In the master bedroom 101b, the playback devices 110l and 110m may be configured, for example, to play back audio content in synchrony as individual ones of playback devices 110, as a bonded playback zone, as a consolidated playback device, and/or any combination thereof. Similarly, in the den 101d, the playback devices 110h-j can be configured, for instance, to play back audio content in synchrony as individual ones of playback devices 110, as one or more bonded playback devices, and/or as one or more consolidated playback devices. Additional details regarding bonded and consolidated playback devices are described below with respect to Figures 1B and 1E.

In some examples, one or more of the playback zones in the environment 101 may each be playing different audio content. For instance, a user may be grilling on the patio 101i and listening to hip hop music being played by the playback device 110c while another user is preparing food in the kitchen 101h and listening to classical music played by the playback device 110b. In another example, a playback zone may play the same audio content in synchrony with another playback zone. For instance, the user may be in the office 101e listening to the playback device 110f playing back the same hip hop music being played back by playback device 110c on the patio 101i. In some examples, the playback devices 110c and 110f play back the hip hop music in synchrony such that the user perceives that the audio content is being played seamlessly (or at least substantially seamlessly) while moving between different playback zones. Additional details regarding audio playback synchronization among playback devices and/or zones can be found, for example, in U. S. Patent No. 8,234,395 entitled, "System and method for synchronizing operations among a plurality of independently clocked digital data processing devices," which is incorporated herein by reference in its entirety.

### a. Suitable Media Playback System

Figure 1B is a schematic diagram of the media playback system 100 and a cloud network 102. For ease of illustration, certain devices of the media playback system 100 and the cloud network 102 are omitted from Figure 1B. One or more communication links 103 (referred to hereinafter as "the links 103") communicatively couple the media playback system 100 and the cloud network 102.

The links 103 can comprise, for example, one or more wired networks, one or more wireless networks, one or more wide area networks (WAN), one or more local area networks (LAN), one or more personal area networks (PAN), one or more telecommunication networks (e.g., one or more Global System for Mobiles (GSM) networks, Code Division Multiple Access (CDMA) networks, Long-Term Evolution (LTE) networks, 5G communication network networks, and/or other suitable data transmission protocol networks), etc. The cloud network 102 is configured to deliver media content (e.g., audio content, video content, photographs, social media content) to the media playback system 100 in response to a request transmitted from the media playback system 100 via the links 103. In some examples, the cloud network 102 is further configured to receive data (e.g. voice input data) from the media playback system 100 and correspondingly transmit commands and/or media content to the media playback system 100.

The cloud network 102 comprises computing devices 106 (identified separately as a first computing device 106a, a second computing device 106b, and a third computing device 106c). The computing devices 106 can comprise individual computers or servers, such as, for example, a media streaming service server storing audio and/or other media content, a voice service server, a social media server, a media playback system control server, etc. In some examples, one or more of the computing devices 106 comprise modules of a single computer or server. In certain examples, one or more of the computing devices 106 comprise one or more modules, computers, and/or servers. Moreover, while the cloud network 102 is described above in the context of a single cloud network, in some examples the cloud network 102 comprises a plurality of cloud networks comprising communicatively coupled computing devices. Furthermore, while the cloud network 102 is shown in Figure 1B as having three of the computing devices 106, in some examples, the cloud network 102 comprises fewer (or more than) three computing devices 106.

The media playback system 100 is configured to receive media content from the networks 102 via the links 103. The received media content can comprise, for example, a Uniform Resource Identifier (URI) and/or a Uniform Resource Locator (URL). For instance, in some examples, the media playback system 100 can stream, download, or otherwise obtain data from a URI or a URL corresponding to the received media content. A network 104 communicatively couples the links 103 and at least a portion of the devices (e.g., one or more of the playback devices 110, NMDs 120, and/or control devices 130) of the media playback system 100. The network 104 can include, for example, a wireless network (e.g., a WiFi network, a Bluetooth, a Z-Wave network, a ZigBee, and/or other suitable wireless communication protocol network) and/or a wired network (e.g., a network comprising Ethernet, Universal Serial Bus (USB), and/or another suitable wired communication). As those of ordinary skill in the art will appreciate, as used herein, "WiFi" can refer to several different communication protocols including, for example, Institute of Electrical and Electronics Engineers (IEEE) 802.11a, 802.11b, 802.11g, 802.11n, 802.11ac, 802.11ac, 802.11ad, 802.1 1af, 802.1 1ah, 802.11ai, 802.11aj, 802.11aq, 802.11ax, 802.11ay, 802.15, etc. transmitted at 2.4 Gigahertz (GHz), 5 GHz, and/or another suitable frequency.

In some examples, the network 104 comprises a dedicated communication network that the media playback system 100 uses to transmit messages between individual devices and/or to transmit media content to and from media content sources (e.g., one or more of the computing devices 106). In certain examples, the network 104 is configured to be accessible only to devices in the media playback system 100, thereby reducing interference and competition with other household devices. In other examples, however, the network 104 comprises an existing household communication network (e.g., a household WiFi network). In some examples, the links 103 and the network 104 comprise one or more of the same networks. In some examples, for example, the links 103 and the network 104 comprise a telecommunication network (e.g., an LTE network, a 5G network). Moreover, in some examples, the media playback system 100 is implemented without the network 104, and devices comprising the media playback system 100 can communicate with each other, for example, via one or more direct connections, PANs, telecommunication networks, and/or other suitable communication links.

In some examples, audio content sources may be regularly added or removed from the media playback system 100. In some examples, for example, the media playback system 100 performs an indexing of media items when one or more media content sources are updated, added to, and/or removed from the media playback system 100. The media playback system 100 can scan identifiable media items in some or all folders and/or directories accessible to the playback devices 110, and generate or update a media content database comprising metadata (e.g., title, artist, album, track length) and other associated information (e.g., URIs, URLs) for each identifiable media item found. In some examples, the media content database is stored on one or more of the playback devices 110, network microphone devices 120, and/or control devices 130.

In the illustrated example of Figure 1B, the playback devices 110l and 110m comprise a group 107a. The playback devices 110l and 110m can be positioned in different rooms in a household and be grouped together in the group 107a on a temporary or permanent basis based on user input received at the control device 130a and/or another control device 130 in the media playback system 100. When arranged in the group 107a, the playback devices 1101 and 110m can be configured to play back the same or similar audio content in synchrony from one or more audio content sources. In certain examples, for example, the group 107a comprises a bonded zone in which the playback devices 110l and 110m comprise left audio and right audio channels, respectively, of multi-channel audio content, thereby producing or enhancing a stereo effect of the audio content. In some examples, the group 107a includes additional playback devices 110. In other examples, however, the media playback system 100 omits the group 107a and/or other grouped arrangements of the playback devices 110.

The media playback system 100 includes the NMDs 120a and 120d, each comprising one or more microphones configured to receive voice utterances from a user. In the illustrated example of Figure 1B, the NMD 120a is a standalone device and the NMD 120d is integrated into the playback device 110n. The NMD 120a, for example, is configured to receive voice input 121 from a user 123. In some examples, the NMD 120a transmits data associated with the received voice input 121 to a voice assistant service (VAS) configured to (i) process the received voice input data and (ii) transmit a corresponding command to the media playback system 100. In some example, the computing device 106c comprises one or more modules and/or servers of a VAS (e.g., a VAS operated by one or more of SONOS^{®}, AMAZON^{®}, GOOGLE^{®} APPLE^{®}, MICROSOFT^{®}). The computing device 106c can receive the voice input data from the NMD 120a via the network 104 and the links 103. In response to receiving the voice input data, the computing device 106c processes the voice input data (i.e., "Play Hey Jude by The Beatles"), and determines that the processed voice input includes a command to play a song (e.g., "Hey Jude"). The computing device 106c accordingly transmits commands to the media playback system 100 to play back "Hey Jude" by the Beatles from a suitable media service (e.g., via one or more of the computing devices 106) on one or more of the playback devices 110.

### b. Suitable Playback Devices

Figure 1C is a block diagram of the playback device 110a comprising an input/output 111. The input/output 111 can include an analog I/O 111a (e.g., one or more wires, cables, and/or other suitable communication links configured to carry analog signals) and/or a digital I/O 111b (e.g., one or more wires, cables, or other suitable communication links configured to carry digital signals). In some examples, the analog I/O 111a is an audio line-in input connection comprising, for example, an auto-detecting 3.5mm audio line-in connection. In some examples, the digital I/O 111b comprises a Sony/Philips Digital Interface Format (S/PDIF) communication interface and/or cable and/or a Toshiba Link (TOSLINK) cable. In some examples, the digital I/O 111b comprises a High-Definition Multimedia Interface (HDMI) interface and/or cable. In some examples, the digital I/O 111b includes one or more wireless communication links comprising, for example, a radio frequency (RF), infrared, WiFi, Bluetooth, or another suitable communication protocol. In certain examples, the analog I/O 111a and the digital 111b comprise interfaces (e.g., ports, plugs, jacks) configured to receive connectors of cables transmitting analog and digital signals, respectively, without necessarily including cables.

The playback device 110a, for example, can receive media content (e.g., audio content comprising music and/or other sounds) from a local audio source 105 via the input/output 111 (e.g., a cable, a wire, a PAN, a Bluetooth connection, an ad hoc wired or wireless communication network, and/or another suitable communication link). The local audio source 105 can comprise, for example, a mobile device (e.g., a smartphone, a tablet, a laptop computer) or another suitable audio component (e.g., a television, a desktop computer, an amplifier, a phonograph, a Blu-ray player, a memory storing digital media files). In some examples, the local audio source 105 includes local music libraries on a smartphone, a computer, a networked-attached storage (NAS), and/or another suitable device configured to store media files. In certain examples, one or more of the playback devices 110, NMDs 120, and/or control devices 130 comprise the local audio source 105. In other examples, however, the media playback system omits the local audio source 105 altogether. In some examples, the playback device 110a does not include an input/output 111 and receives all audio content via the network 104.

The playback device 110a further comprises electronics 112, a user interface 113 (e.g., one or more buttons, knobs, dials, touch-sensitive surfaces, displays, touchscreens), and one or more transducers 114 (referred to hereinafter as "the transducers 114"). The electronics 112 is configured to receive audio from an audio source (e.g., the local audio source 105) via the input/output 111, one or more of the computing devices 106a-c via the network 104 (Figure 1B)), amplify the received audio, and output the amplified audio for playback via one or more of the transducers 114. In some examples, the playback device 110a optionally includes one or more microphones 115 (e.g., a single microphone, a plurality of microphones, a microphone array) (hereinafter referred to as "the microphones 115"). In certain examples, for example, the playback device 110a having one or more of the optional microphones 115 can operate as an NMD configured to receive voice input from a user and correspondingly perform one or more operations based on the received voice input.

In the illustrated example of Figure 1C, the electronics 112 comprise one or more processors 112a (referred to hereinafter as "the processors 112a"), memory 112b, software components 112c, a network interface 112d, one or more audio processing components 112g (referred to hereinafter as "the audio components 112g"), one or more audio amplifiers 112h (referred to hereinafter as "the amplifiers 112h"), and power 112i (e.g., one or more power supplies, power cables, power receptacles, batteries, induction coils, Power-over Ethernet (POE) interfaces, and/or other suitable sources of electric power). In some examples, the electronics 112 optionally include one or more other components 112j (e.g., one or more sensors, video displays, touchscreens, battery charging bases).

The processors 112a can comprise clock-driven computing component(s) configured to process data, and the memory 112b can comprise a computer-readable medium (e.g., a tangible, non-transitory computer-readable medium, data storage loaded with one or more of the software components 112c) configured to store instructions for performing various operations and/or functions. The processors 112a are configured to execute the instructions stored on the memory 112b to perform one or more of the operations. The operations can include, for example, causing the playback device 110a to retrieve audio data from an audio source (e.g., one or more of the computing devices 106a-c (Figure 1B)), and/or another one of the playback devices 110. In some examples, the operations further include causing the playback device 110a to send audio data to another one of the playback devices 110a and/or another device (e.g., one of the NMDs 120). Certain examples include operations causing the playback device 110a to pair with another of the one or more playback devices 110 to enable a multi-channel audio environment (e.g., a stereo pair, a bonded zone).

The processors 112a can be further configured to perform operations causing the playback device 110a to synchronize playback of audio content with another of the one or more playback devices 110. As those of ordinary skill in the art will appreciate, during synchronous playback of audio content on a plurality of playback devices, a listener will preferably be unable to perceive time-delay differences between playback of the audio content by the playback device 110a and the other one or more other playback devices 110. Additional details regarding audio playback synchronization among playback devices can be found, for example, in U.S. Patent No. 8,234,395, which was incorporated by reference above.

In some examples, the memory 112b is further configured to store data associated with the playback device 110a, such as one or more zones and/or zone groups of which the playback device 110a is a member, audio sources accessible to the playback device 110a, and/or a playback queue that the playback device 110a (and/or another of the one or more playback devices) can be associated with. The stored data can comprise one or more state variables that are periodically updated and used to describe a state of the playback device 110a. The memory 112b can also include data associated with a state of one or more of the other devices (e.g., the playback devices 110, NMDs 120, control devices 130) of the media playback system 100. In some examples, the state data is shared during predetermined intervals of time (e.g., every 5 seconds, every 10 seconds, every 60 seconds) among at least a portion of the devices of the media playback system 100, so that one or more of the devices have the most recent data associated with the media playback system 100.

The network interface 112d is configured to facilitate a transmission of data between the playback device 110a and one or more other devices on a data network such as, for example, the links 103 and/or the network 104 (Figure 1B). The network interface 112d is configured to transmit and receive data corresponding to media content (e.g., audio content, video content, text, photographs) and other signals (e.g., non-transitory signals) comprising digital packet data including an Internet Protocol (IP)-based source address and/or an IP-based destination address. The network interface 112d can parse the digital packet data such that the electronics 112 properly receives and processes the data destined for the playback device 110a.

In the illustrated example of Figure 1C, the network interface 112d comprises one or more wireless interfaces 112e (referred to hereinafter as "the wireless interface 112e"). The wireless interface 112e (e.g., a suitable interface comprising one or more antennae) can be configured to wirelessly communicate with one or more other devices (e.g., one or more of the other playback devices 110, NMDs 120, and/or control devices 130) that are communicatively coupled to the network 104 (Figure 1B) in accordance with a suitable wireless communication protocol (e.g., WiFi, Bluetooth, LTE). In some examples, the network interface 112d optionally includes a wired interface 112f (e.g., an interface or receptacle configured to receive a network cable such as an Ethernet, a USB-A, USB-C, and/or Thunderbolt cable) configured to communicate over a wired connection with other devices in accordance with a suitable wired communication protocol. In certain examples, the network interface 112d includes the wired interface 112f and excludes the wireless interface 112e. In some examples, the electronics 112 excludes the network interface 112d altogether and transmits and receives media content and/or other data via another communication path (e.g., the input/output 111).

The audio components 112g are configured to process and/or filter data comprising media content received by the electronics 112 (e.g., via the input/output 111 and/or the network interface 112d) to produce output audio signals. In some examples, the audio processing components 112g comprise, for example, one or more digital-to-analog converters (DAC), audio preprocessing components, audio enhancement components, a digital signal processors (DSPs), and/or other suitable audio processing components, modules, circuits, etc. In certain examples, one or more of the audio processing components 112g can comprise one or more subcomponents of the processors 112a. In some examples, the electronics 112 omits the audio processing components 112g. In some examples, the processors 112a execute instructions stored on the memory 112b to perform audio processing operations to produce the output audio signals.

The amplifiers 112h are configured to receive and amplify the audio output signals produced by the audio processing components 112g and/or the processors 112a. The amplifiers 112h can comprise electronic devices and/or components configured to amplify audio signals to levels sufficient for driving one or more of the transducers 114. In some examples, the amplifiers 112h include one or more switching or class-D power amplifiers. In other examples, however, the amplifiers include one or more other types of power amplifiers (e.g., linear gain power amplifiers, class-A amplifiers, class-B amplifiers, class-AB amplifiers, class-C amplifiers, class-D amplifiers, class-E amplifiers, class-F amplifiers, class-G and/or class H amplifiers, and/or another suitable type of power amplifier). In certain examples, the amplifiers 112h comprise a suitable combination of two or more of the foregoing types of power amplifiers. Moreover, in some examples, individual ones of the amplifiers 112h correspond to individual ones of the transducers 114. In other examples, however, the electronics 112 includes a single one of the amplifiers 112h configured to output amplified audio signals to a plurality of the transducers 114. In some other examples, the electronics 112 omits the amplifiers 112h.

The transducers 114 (e.g., one or more speakers and/or speaker drivers) receive the amplified audio signals from the amplifier 112h and render or output the amplified audio signals as sound (e.g., audible sound waves having a frequency between about 20 Hertz (Hz) and 20 kilohertz (kHz)). In some examples, the transducers 114 can comprise a single transducer. In other examples, however, the transducers 114 comprise a plurality of audio transducers. In some examples, the transducers 114 comprise more than one type of transducer. For example, the transducers 114 can include one or more low frequency transducers (e.g., subwoofers, woofers), mid-range frequency transducers (e.g., mid-range transducers, mid-woofers), and one or more high frequency transducers (e.g., one or more tweeters). As used herein, "low frequency" can generally refer to audible frequencies below about 500 Hz, "mid-range frequency" can generally refer to audible frequencies between about 500 Hz and about 2 kHz, and "high frequency" can generally refer to audible frequencies above 2 kHz. In certain examples, however, one or more of the transducers 114 comprise transducers that do not adhere to the foregoing frequency ranges. For example, one of the transducers 114 may comprise a mid-woofer transducer configured to output sound at frequencies between about 200 Hz and about 5 kHz.

By way of illustration, SONOS, Inc. presently offers (or has offered) for sale certain playback devices including, for example, a "SONOS ONE," "MOVE," "SONOS FIVE," "BEAM," "ARC," "PLAYBAR," "PLAYBASE," "PORT," "BOOST," "AMP," and "SUB." Other suitable playback devices may additionally or alternatively be used to implement the playback devices of examples disclosed herein. Additionally, one of ordinary skilled in the art will appreciate that a playback device is not limited to the examples described herein or to SONOS product offerings. In some examples, one or more playback devices 110 comprises wired or wireless headphones (e.g., over-the-ear headphones, on-ear headphones, in-ear earphones). In other examples, one or more of the playback devices 110 comprise a docking station and/or an interface configured to interact with a docking station for personal mobile media playback devices. In certain examples, a playback device may be integral to another device or component such as a television, a lighting fixture, or some other device for indoor or outdoor use. In some examples, a playback device omits a user interface and/or one or more transducers. For example, FIG. 1D is a block diagram of a playback device 110p comprising the input/output 111 and electronics 112 without the user interface 113 or transducers 114.

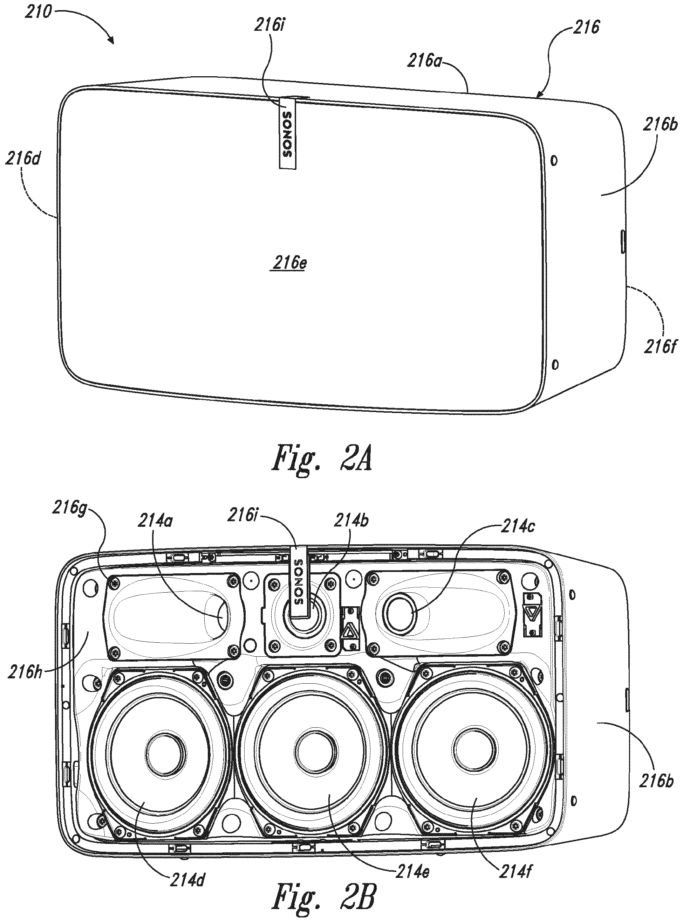

Figure 1E is a block diagram of a bonded playback device 110q comprising the playback device 110a (Figure 1C) sonically bonded with the playback device 110i (e.g., a subwoofer) (Figure 1A). In the illustrated example, the playback devices 110a and 110i are separate ones of the playback devices 110 housed in separate enclosures. In some examples, however, the bonded playback device 110q comprises a single enclosure housing both the playback devices 110a and 110i. The bonded playback device 110q can be configured to process and reproduce sound differently than an unbonded playback device (e.g., the playback device 110a of Figure 1C) and/or paired or bonded playback devices (e.g., the playback devices 110l and 110m of Figure 1B). In some examples, the playback device 110a is full-range playback device configured to render low frequency, mid-range frequency, and high frequency audio content, and the playback device 110i is a subwoofer configured to render low frequency audio content. In some examples, the playback device 110a, when bonded with the first playback device, is configured to render only the mid-range and high frequency components of a particular audio content, while the playback device 110i renders the low frequency component of the particular audio content. In some examples, the bonded playback device 1 10q includes additional playback devices and/or another bonded playback device. Additional playback device examples are described in further detail below with respect to Figures 2A-2C.

### c. Suitable Network Microphone Devices (NMDs)

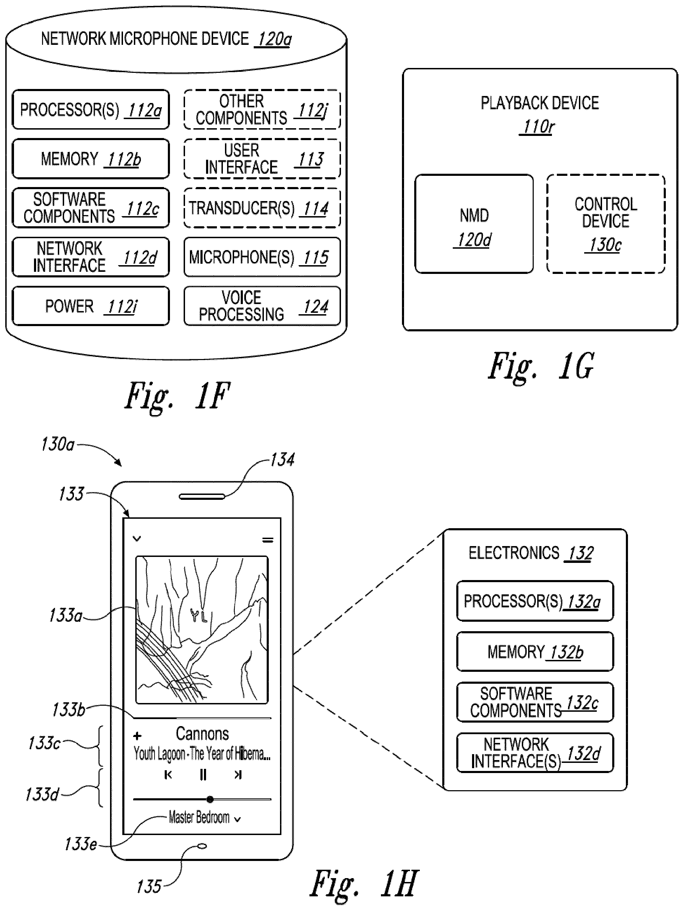

Figure 1F is a block diagram of the NMD 120a (Figures 1A and 1B). The NMD 120a includes one or more voice processing components 124 (hereinafter "the voice components 124") and several components described with respect to the playback device 110a (Figure 1C) including the processors 112a, the memory 112b, and the microphones 115. The NMD 120a optionally comprises other components also included in the playback device 110a (Figure 1C), such as the user interface 113 and/or the transducers 114. In some examples, the NMD 120a is configured as a media playback device (e.g., one or more of the playback devices 110), and further includes, for example, one or more of the audio components 112g (Figure 1C), the amplifiers 114, and/or other playback device components. In certain examples, the NMD 120a comprises an Internet of Things (IoT) device such as, for example, a thermostat, alarm panel, fire and/or smoke detector, etc. In some examples, the NMD 120a comprises the microphones 115, the voice processing components 124, and only a portion of the components of the electronics 112 described above with respect to Figure 1B. In some examples, for example, the NMD 120a includes the processor 112a and the memory 112b (Figure 1B), while omitting one or more other components of the electronics 112. In some examples, the NMD 120a includes additional components (e.g., one or more sensors, cameras, thermometers, barometers, hygrometers).

In some examples, an NMD can be integrated into a playback device. Figure 1G is a block diagram of a playback device 110r comprising an NMD 120d. The playback device 110r can comprise many or all of the components of the playback device 110a and further include the microphones 115 and voice processing components 124 (Figure 1F). The playback device 110r optionally includes an integrated control device 130c. The control device 130c can comprise, for example, a user interface (e.g., the user interface 113 of Figure 1B) configured to receive user input (e.g., touch input, voice input) without a separate control device. In other examples, however, the playback device 110r receives commands from another control device (e.g., the control device 130a of Figure 1B).

Referring again to Figure 1F, the microphones 115 are configured to acquire, capture, and/or receive sound from an environment (e.g., the environment 101 of Figure 1A) and/or a room in which the NMD 120a is positioned. The received sound can include, for example, vocal utterances, audio played back by the NMD 120a and/or another playback device, background voices, ambient sounds, etc. The microphones 115 convert the received sound into electrical signals to produce microphone data. The voice processing components 124 receives and analyzes the microphone data to determine whether a voice input is present in the microphone data. The voice input can comprise, for example, an activation word followed by an utterance including a user request. As those of ordinary skill in the art will appreciate, an activation word is a word or other audio cue that signifying a user voice input. For instance, in querying the AMAZON^{®} VAS, a user might speak the activation word "Alexa." Other examples include "Ok, Google" for invoking the GOOGLE^{®} VAS and "Hey, Siri" for invoking the APPLE^{®} VAS.

After detecting the activation word, voice processing 124 monitors the microphone data for an accompanying user request in the voice input. The user request may include, for example, a command to control a third-party device, such as a thermostat (e.g., NEST^{®} thermostat), an illumination device (e.g., a PHILIPS HUE ^{®} lighting device), or a media playback device (e.g., a Sonos^{®} playback device). For example, a user might speak the activation word "Alexa" followed by the utterance "set the thermostat to 68 degrees" to set a temperature in a home (e.g., the environment 101 of Figure 1A). The user might speak the same activation word followed by the utterance "turn on the living room" to turn on illumination devices in a living room area of the home. The user may similarly speak an activation word followed by a request to play a particular song, an album, or a playlist of music on a playback device in the home.

### d. Suitable Control Devices

Figure 1H is a partially schematic diagram of the control device 130a (Figures 1A and 1B). As used herein, the term "control device" can be used interchangeably with "controller" or "control system." Among other features, the control device 130a is configured to receive user input related to the media playback system 100 and, in response, cause one or more devices in the media playback system 100 to perform an action(s) or operation(s) corresponding to the user input. In the illustrated example, the control device 130a comprises a smartphone (e.g., an iPhone^{™}, an Android phone) on which media playback system controller application software is installed. In some examples, the control device 130a comprises, for example, a tablet (e.g., an iPad^{™}), a computer (e.g., a laptop computer, a desktop computer), and/or another suitable device (e.g., a television, an automobile audio head unit, an IoT device). In certain examples, the control device 130a comprises a dedicated controller for the media playback system 100. In other examples, as described above with respect to Figure 1G, the control device 130a is integrated into another device in the media playback system 100 (e.g., one more of the playback devices 110, NMDs 120, and/or other suitable devices configured to communicate over a network).

The control device 130a includes electronics 132, a user interface 133, one or more speakers 134, and one or more microphones 135. The electronics 132 comprise one or more processors 132a (referred to hereinafter as "the processors 132a"), a memory 132b, software components 132c, and a network interface 132d. The processor 132a can be configured to perform functions relevant to facilitating user access, control, and configuration of the media playback system 100. The memory 132b can comprise data storage that can be loaded with one or more of the software components executable by the processor 132a to perform those functions. The software components 132c can comprise applications and/or other executable software configured to facilitate control of the media playback system 100. The memory 112b can be configured to store, for example, the software components 132c, media playback system controller application software, and/or other data associated with the media playback system 100 and the user.

The network interface 132d is configured to facilitate network communications between the control device 130a and one or more other devices in the media playback system 100, and/or one or more remote devices. In some examples, the network interface 132d is configured to operate according to one or more suitable communication industry standards (e.g., infrared, radio, wired standards including IEEE 802.3, wireless standards including IEEE 802.11a, 802.11b, 802.11g, 802.11n, 802.11ac, 802.15, 4G, LTE). The network interface 132d can be configured, for example, to transmit data to and/or receive data from the playback devices 110, the NMDs 120, other ones of the control devices 130, one of the computing devices 106 of Figure 1B, devices comprising one or more other media playback systems, etc. The transmitted and/or received data can include, for example, playback device control commands, state variables, playback zone and/or zone group configurations. For instance, based on user input received at the user interface 133, the network interface 132d can transmit a playback device control command (e.g., volume control, audio playback control, audio content selection) from the control device 130 to one or more of the playback devices 110. The network interface 132d can also transmit and/or receive configuration changes such as, for example, adding/removing one or more playback devices 110 to/from a zone, adding/removing one or more zones to/from a zone group, forming a bonded or consolidated player, separating one or more playback devices from a bonded or consolidated player, among others.

The user interface 133 is configured to receive user input and can facilitate 'control of the media playback system 100. The user interface 133 includes media content art 133a (e.g., album art, lyrics, videos), a playback status indicator 133b (e.g., an elapsed and/or remaining time indicator), media content information region 133c, a playback control region 133d, and a zone indicator 133e. The media content information region 133c can include a display of relevant information (e.g., title, artist, album, genre, release year) about media content currently playing and/or media content in a queue or playlist. The playback control region 133d can include selectable (e.g., via touch input and/or via a cursor or another suitable selector) icons to cause one or more playback devices in a selected playback zone or zone group to perform playback actions such as, for example, play or pause, fast forward, rewind, skip to next, skip to previous, enter/exit shuffle mode, enter/exit repeat mode, enter/exit cross fade mode, etc. The playback control region 133d may also include selectable icons to modify equalization settings, playback volume, and/or other suitable playback actions. In the illustrated example, the user interface 133 comprises a display presented on a touch screen interface of a smartphone (e.g., an iPhone^{™}, an Android phone). In some examples, however, user interfaces of varying formats, styles, and interactive sequences may alternatively be implemented on one or more network devices to provide comparable control access to a media playback system.

The one or more speakers 134 (e.g., one or more transducers) can be configured to output sound to the user of the control device 130a. In some examples, the one or more speakers comprise individual transducers configured to correspondingly output low frequencies, mid-range frequencies, and/or high frequencies. In some examples, the control device 130a is configured as a playback device (e.g., one of the playback devices 110). Similarly, in some examples the control device 130a is configured as an NMD (e.g., one of the NMDs 120), receiving voice commands and other sounds via the one or more microphones 135.

The one or more microphones 135 can comprise, for example, one or more condenser microphones, electret condenser microphones, dynamic microphones, and/or other suitable types of microphones or transducers. In some examples, two or more of the microphones 135 are arranged to capture location information of an audio source (e.g., voice, audible sound) and/or configured to facilitate filtering of background noise. Moreover, in certain examples, the control device 130a is configured to operate as playback device and an NMD. In other examples, however, the control device 130a omits the one or more speakers 134 and/or the one or more microphones 135. For instance, the control device 130a may comprise a device (e.g., a thermostat, an IoT device, a network device) comprising a portion of the electronics 132 and the user interface 133 (e.g., a touch screen) without any speakers or microphones.

### III. Example Systems and Devices

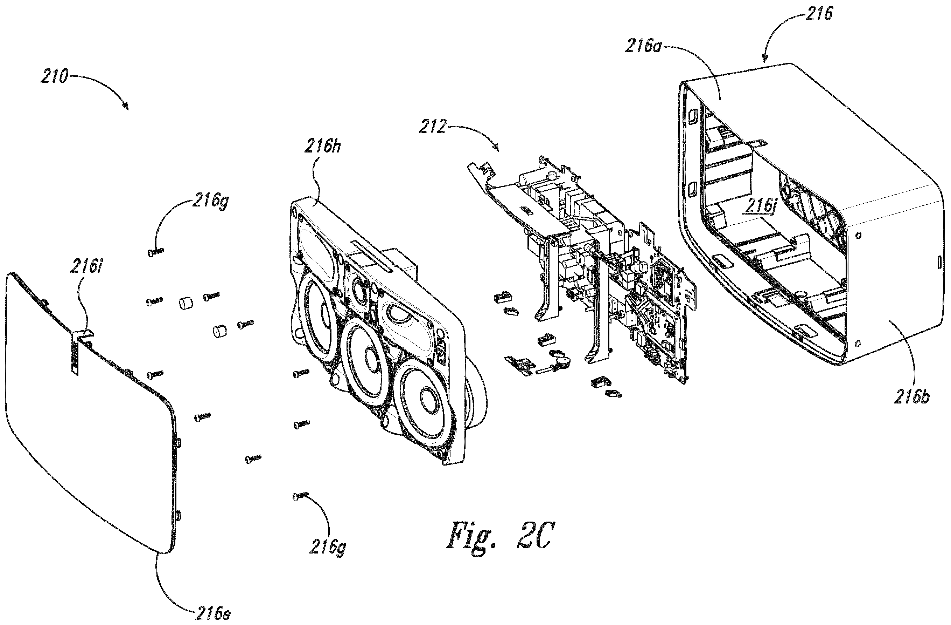

Figure 2A is a front isometric view of a playback device 210 configured in accordance with examples of the disclosed technology. Figure 2B is a front isometric view of the playback device 210 without a grille 216e. Figure 2C is an exploded view of the playback device 210. Referring to Figures 2A-2C together, the playback device 210 comprises a housing 216 that includes an upper portion 216a, a right or first side portion 216b, a lower portion 216c, a left or second side portion 216d, the grille 216e, and a rear portion 216f. A plurality of fasteners 216g (e.g., one or more screws, rivets, clips) attaches a frame 216h to the housing 216. A cavity 216j (Figure 2C) in the housing 216 is configured to receive the frame 216h and electronics 212. The frame 216h is configured to carry a plurality of transducers 214 (identified individually in Figure 2B as transducers 214a-f). The electronics 212 (e.g., the electronics 112 of Figure 1C) is configured to receive audio content from an audio source and send electrical signals corresponding to the audio content to the transducers 214 for playback.

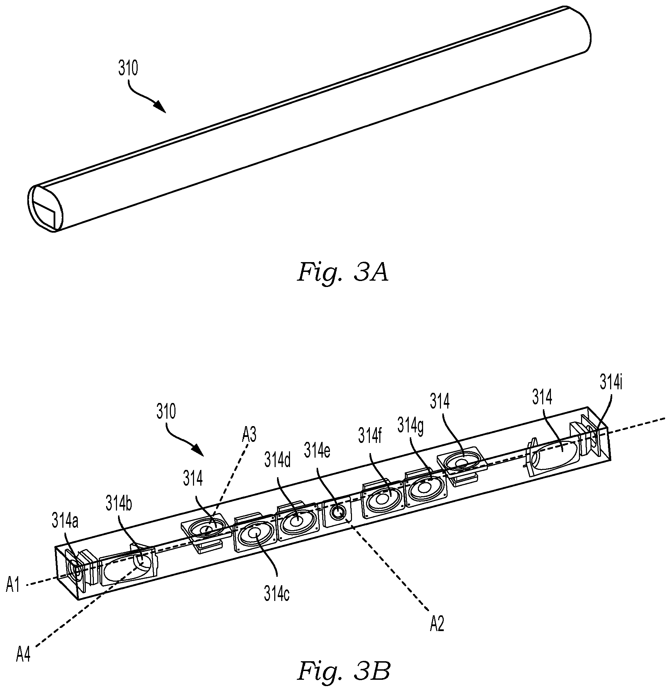

The transducers 214 are configured to receive the electrical signals from the electronics 112, and further configured to convert the received electrical signals into audible sound during playback. For instance, the transducers 214a-c (e.g., tweeters) can be configured to output high frequency sound (e.g., sound waves having a frequency greater than about 2 kHz). The transducers 214d-f (e.g., mid-woofers, woofers, midrange speakers) can be configured output sound at frequencies lower than the transducers 214a-c (e.g., sound waves having a frequency lower than about 2 kHz). In some examples, the playback device 210 includes a number of transducers different than those illustrated in Figures 2A-2C. For example, as described in further detail below with respect to Figures 3A-3C, the playback device 210 can include fewer than six transducers (e.g., one, two, three). In other examples, however, the playback device 210 includes more than six transducers (e.g., nine, ten). Moreover, in some examples, all or a portion of the transducers 214 are configured to operate as a phased array to desirably adjust (e.g., narrow or widen) a radiation pattern of the transducers 214, thereby altering a user's perception of the sound emitted from the playback device 210.

In the illustrated example of Figures 2A-2C, a filter 216i is axially aligned with the transducer 214b. The filter 216i can be configured to desirably attenuate a predetermined range of frequencies that the transducer 214b outputs to improve sound quality and a perceived sound stage output collectively by the transducers 214. In some examples, however, the playback device 210 omits the filter 216i. In other examples, the playback device 210 includes one or more additional filters aligned with the transducers 214b and/or at least another of the transducers 214.

Figure 3A is a perspective view of an audio playback device 310, and Figure 3B shows the device 310 with the outer body drawn transparently to illustrate the plurality of transducers 314a-k therein (collectively "transducers 314"). The transducers 314 can be similar or identical to any one of the transducers 214a-f described previously. In this example, the playback device 310 takes the form of a soundbar that is elongated along a horizontal axis A1 and is configured to face along a primary sound axis A2 that is substantially orthogonal to the first horizontal axis A1. In other embodiments, the playback device 310 can assume other forms, for example having more or fewer transducers, having other form-factors, or having any other suitable modifications with respect to the embodiment shown in Figures 3A and 3B.

The playback device 310 can include individual transducers 314a-k oriented in different directions or otherwise configured to direct sound along different sound axes. For example, the transducers 314c-g can be configured to direct sound primarily along directions parallel to the primary sound axis A2 of the playback device 310. Additionally, the playback device 310 can include left and right up-firing transducers (e.g., transducers 314j and 314k) that are configured to direct sound along axes that are angled vertically with respect to the primary sound axis A2. For example, the left up-firing transducer 314j is configured to direct sound along the axis A3, which is vertically angled with respect to the horizontal primary axis A2. In some embodiments, the up-firing sound axis A3 can be angled with respect to the primary sound axis A2 by between about 50 degrees and about 90 degrees, between about 60 degrees and about 80 degrees, or about 70 degrees.

The playback device 310 can also include one or more side-firing transducers (e.g., transducers 314a, 314b, 314h, and 314i), which can direct sound along axes that are horizontally angled with respect to the primary sound axis A2. In the illustrated embodiment, the outermost transducers 314a and 314i can be configured to direct sound primarily along the first horizontal axis A1 or at least partially horizontally angled therefrom, while the side-firing transducers 314b and 314h are configured to direct sound along an axis that lies between the axes A1 and A2. For example, the left side-firing transducer 314b is configured to direct sound along axis A4.

In operation, the playback device 310 can be utilized to play back 3D audio content that includes a vertical component. As noted previously, certain 3D audio or other immersive audio formats include one or more vertical channels in addition to any lateral (e.g., left, right, front) channels. Examples of such 3D audio formats include DOLBY ATMOS, MPEG-H, and DTS:X formats. Additional details of the playback device 310 of Figures 3A and 3B are disclosed in U.S. Provisional Patent Application 62/940,640, SYSTEMS AND METHODS OF SPATIAL AUDIO PLAYBACK WITH ENHANCED IMMERSIVENESS, filed November 26, 2019, the disclosure of which is incorporated herein by reference in its entirety.

In operation, the playback device 310 can also be utilized to play back audio content in one of a plurality of modes, including a first operating mode and a second operating mode. The first mode may correspond to an audio environment in which the playback device 310 plays back multiple separate audio channels (e.g., left, right, and center), and the second mode may correspond to an environment in which the playback device 310 is bonded to one or more satellite playback devices via a network interface, and those satellite playback devices are configured to play back at least some of the channels (e.g., left and right channels). In the second mode, the playback device 310 may constitute a first playback device and the one or more satellite playback devices may constitute second and third playback devices. As explained in detail elsewhere herein, the first playback device 310 may automatically transition from the first mode to the second mode when the second and/or third playback devices become bonded to the first playback device 310.

In the first mode, the playback device 310 can play back, via the transducers 314, multichannel audio content, which may include a left input channel, a right input channel, and a center input channel. In the first mode, the audio content provided via individual transducers 314a-k may correspond to an individual input channel (e.g., the left, right, or center input channels) or an array of multiple channels (e.g., the left, right, and center input channels). As an example, in the first mode, transducer 314a may provide the right input channel, transducers 314c-k may provide an array of the left, right, and center input channels, and transducer 314i may provide the left input channel. As another example, in the first mode, each of transducers 314a-k may contribute to an array of the left, right, and center input channels.

The arrayed output provided via the transducers 314 may be based on one or more array transfer functions, including a sum array transfer function and a difference array transfer function. For instance, in some examples, the playback device 310 may generate a first input signal corresponding to a sum of the input channels and a second input signal corresponding to a difference of the input channels. The sum and difference array transfer functions can be applied to the generated first and second input signals to produce the arrayed output. Additional details regarding the arrayed output are described in U.S. Patent Application 16/557,827, SUM-DIFFERENCE ARRAYS FOR AUDIO PLAYBACK DEVICES, filed September 9, 2019, the disclosure of which is incorporated herein by reference in its entirety.

In the second mode, the playback device 310 can play back, via the transducers 314, a portion of the multichannel audio content played back in the first mode, and cause other portions of the multichannel audio content to be played back via satellite playback devices that are bonded to the playback device 310 in the second mode. For example, the playback device 310 can play back a first portion of the audio content, and the satellite playback devices can play back a second portion of the audio content. More specifically, the playback device 310 can play back, via the transducers 314, audio content corresponding at least to the center input channel, and can cause the satellite playback devices to play back audio content corresponding at least to the right and left input channels, e.g., with one of the satellite playback devices providing the right channel and another of the satellite playback devices providing the left channel. In some examples, the playback device 310 may play back the center channel and a portion (e.g., less than a full portion) of the left channel and/or right channel. As such, in the second mode, the audio provided via the playback device 310 may be an array of the left, right, and/or center channels.

As described in more detail elsewhere herein, in various implementations the playback device 310 can transmit multichannel audio content to the satellite playback devices for playback. For example, a first satellite playback device may receive 4-channel audio data (e.g., left, right, center, and vertical channels tailored for that particular device), and a second satellite playback device may receive different 4-channel audio data (e.g., having suitable channels tailored for that particular device). This approach can be particularly useful when the satellite playback devices are multi-transducer devices capable of effectively outputting multichannel audio. However, this approach can involve transmitting large amounts of data over a wireless network connection (e.g., a LAN). In some instances, due to network capacity, congestion from other uses of the network, and other factors, the data may be too large to transmit wirelessly to the satellite playback devices for synchronous audio playback. Accordingly, to facilitate wireless transmission of multichannel audio to the satellite playback devices, the playback device 310 may generate and transmit compressed audio streams for each satellite playback device. The satellite playback devices may then each receive, decompress, and play back their respective multichannel audio streams. As discussed in more detail elsewhere herein, the particular compression scheme(s) utilized by the playback device 310 can vary based on a number of input parameters, such as a device location parameter, a listener location parameter, a network condition parameter, an environmental acoustics parameter, an audio content parameter, or any other suitable input parameter.

In the second mode, the audio played back via the playback device 310 may be based on one or more parameters of at least one of the satellite playback devices. In doing so, the audio played back via the playback device 310 and the satellite playback devices can be substantially synchronous when experienced by the listener and/or have substantially similar acoustic signatures or characteristics (e.g., radiation patterns) to one another. Providing audio with substantially similar or matching acoustic signatures can help "blend" the audio provided from each of the playback device 310 and the satellite playback device to provide a more desirable listening experience. Additionally, by providing synchronous multichannel audio via multiple playback devices, as opposed to a single playback device, the separation between the center input channel and both the right and left input channels is greater, which thereby widens the sound stage experienced by the user and creates a better listening experience.

The playback device 310 can provide audio with different outputs when operating in the first mode relative to the second mode. For example, when the playback device 310 is operating in the first mode, the audio provided (e.g., for the center input channel) can have a first acoustic signature or characteristic, whereas when operating in the second mode, the audio provided (e.g., for the same center input channel) can have a second, different acoustic signature or characteristic. As previously described, this difference can be at least partially attributed to the playback device adjusting the acoustic signature of the audio in the second mode based on one or more parameters associated with the satellite playback devices. As explained in detail elsewhere, the playback device may automatically transition itself from the first mode to the second mode, and in some examples back to the first mode, depending on whether satellite playback devices are bonded thereto. Additionally, in at least some examples, the audio output via the first playback device 310 while operating in the second mode may vary depending on the particular characteristics of the satellite playback devices. In various examples, the characteristics of the satellite playback devices can include a device model, number of transducers, an acoustic signature, radiation pattern, device orientation (e.g., vertical or horizontal), device location relative to the playback device 310, or other similar characteristics. Such characteristics can be received at the first playback device 310 (e.g., from a control device or the satellite playback devices over a local network, from one or more remote computing devices over a wide area network). Additionally or alternatively, such characteristics can be determined via the first playback device 310. For example, one or more microphones of the first playback device 310 can be used to determine an acoustic signature, directivity, etc. of one or more bonded playback devices.

### IV. Example Transmission of Multichannel Audio Content to Satellite Playback Devices

As noted previously, conventional home-theatre arrangements often involve satellite playback devices that each play back a single dedicated audio channel (e.g., a left rear satellite playback device plays back only a left rear audio channel). Spatial audio formats (e.g., Dolby Atmos, DTS:X) allow for a greater number of output channels, which can provide a more immersive listening experience with the use of satellite playback devices that output multichannel audio (as opposed to single dedicated channels). For example, a soundbar (or other primary playback device) may be coupled with four or more satellite playback devices that are each capable of outputting four individual audio channels (e.g., left, right, center, and vertical). This arrangement would necessitate 16 data channels transmitted from the soundbar. Transmission of this amount of data may exceed the network capacity, particularly as modern wireless environments can be quite congested with network traffic. As such, supporting high numbers of channels for synchronous audio playback among wirelessly connected playback devices can be challenging.

The present technology addresses these and other shortcomings by generating compressed multichannel audio streams via a primary playback device (e.g., a soundbar), and then transmitting the compressed multichannel audio streams to respective satellite playback devices. These satellite playback devices then decompress and play back their respective multichannel audio streams in synchrony with audio playback via the primary playback device. By utilizing appropriate compression schemes, the overall amount of data transmitted wirelessly to the satellite playback devices can be markedly reduced. Moreover, the particular compression scheme(s) used can vary over time and/or among the different satellite playback devices. In various examples, the compression scheme(s) utilized via the primary playback device can be selected and/or adjusted based on one or more input parameters, such as psychoacoustic analysis of the audio content, spatial information, user location, device location (e.g., relative to a user or to other devices), device placement (e.g., relative to a wall or other features of the environment), room acoustics, network conditions, or any other suitable input parameters.

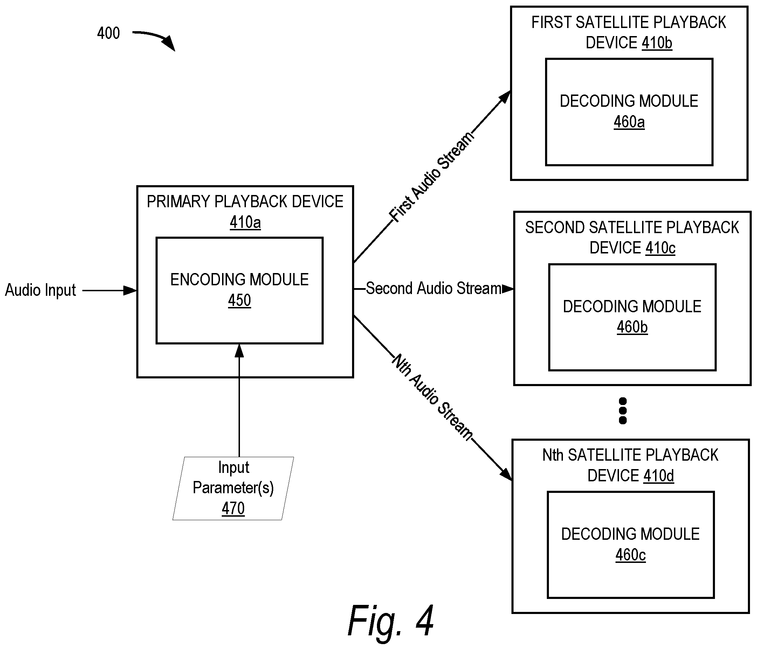

Figure 4 is a schematic block diagram of a media playback system 400 including a primary playback device 410a in wireless communication with a first satellite playback device 410b, a second satellite playback device 410c, and an nth satellite playback device 410d (collectively "playback devices 410"). As used herein, a "primary playback device" includes a playback device that receives audio input from an audio source and transmits at least a portion of that audio to other playback devices for synchronous playback. As used herein, a "satellite playback device" includes a playback device that receives audio from another playback device (e.g., a primary playback device) rather than directly from another audio source. In various arrangements, a particular playback device may operate as either a primary playback device or as a satellite playback device depending on the particular arrangement and configuration of the media playback system. As but one example, a primary playback device may take the form of a soundbar, while satellite playback devices can be additional soundbars, other types of multichannel audio playback devices, subwoofers, or any other suitable audio playback devices. In various implementations, any one of the playback devices 410a-d can include some or all of the features described above with respect to playback devices 110a, 210, and/or 310.

Additional components of the primary playback device 410a and the satellite playback devices 410b-d are omitted for clarity, but may include, among others, features described above with respect to Figure 1C such as input/output components 111, electronics components 112, audio transducers 114, user interface 113 (Figure 1C), and/or any other suitable components. In at least some examples, some or all of the playback devices 410a-d can also include network microphone device (NMD) components, such as those described above with respect to Figures 1F and 1G. For example, some or all of the playback devices 410a-d can include one or more microphone(s) and associated electronics to capture and process audio data from the surrounding environment.

As shown in Figure 4, the primary playback device 410a receives an audio input. The audio input can be received from a local audio source (e.g., via a wired connection to a television, Blu-ray player, etc., or a local wireless connection) and/or a remote audio source (e.g., a streaming service accessed via a WAN), or any other suitable audio source). The audio input can be multichannel audio in any suitable format, such as Dolby Atmos, DTS:X, etc.

The primary playback device 410a includes an encoding module 450 that is configured to process the incoming audio input stream into multiple different output streams, which can then be transmitted to respective satellite playback devices 410b, 410c, and/or 410d, as well as an audio output stream that can be played back via transducers of the primary playback device 410a itself. The encoding module 450 can be implemented as software, hardware, or any suitable combination thereof.

In the illustrated example, the encoding module can generate a first audio stream that is transmitted (e.g., via a wireless network interface) to the first satellite playback device 410b, a second audio stream that is transmitted to the second satellite playback device 410c, and an nth audio stream that is transmitted to the nth satellite playback device 410d. Among examples, the encoding module 450 can generate compressed audio streams such that the amount of data transmitted to the satellite playback devices is smaller than the corresponding "raw" input data received from the audio source.

Although the illustrated configuration depicts each stream being transmitted from the primary playback device 410a directly to the satellite playback devices 410b-d, in various implementations the particular audio streams may be passed from one satellite playback device to another, in a mesh network configuration, rather than each stream being transmitted directly from the primary playback device to the respective satellite playback device.

The encoding module 450 is also configured to receive or obtain one or more input parameter(s) 470. In operation, the encoding module may select or adjust the particular encoding scheme utilized to generate some or all of the output audio streams based at least in part on the input parameters. For example, possible input parameters 470 include a device location parameter (e.g., a device location relative to other devices, relative to a user, etc.), a listener location parameter (e.g., a listener's location relative to one or more devices, the presence or absence of listener(s) in an environment, an indication of listener movement, an indication of the number of listeners present in the environment, etc.), a network condition parameter (e.g., available network transmission speed, number of devices connected to the network, etc.), an environmental acoustics parameter (e.g., room impulse response or other indicator of a room's acoustic properties, background noise levels within the environment, etc.), and/or an audio content parameter (e.g., type of audio content (home theatre audio vs. standalone audio, dialogue vs. non-speech audio), audio format (e.g., Dolby Atmos vs. 5.1), audio characteristics such as frequency range, amplitude, spectral density, or any other suitable audio content parameter.)

Location parameters such as device location(s) and listener location(s) can be obtained or generated using any suitable techniques. In some examples, one or more devices can transmit and/or receive localization signals which are then processed to determine real-world positions. Localization signals can include, among examples, electromagnetic signals (e.g., laser, ultra-wideband (UWB), WI-FI, etc.), sound signals (e.g., audible or ultrasonic sound signals), or any other suitable localization signals. Such signals can be transmitted and/or received via the playback devices, a controller device held by a user (e.g., a smartphone), or any other suitable device.

In the case of optical localization, a transmitter device can be equipped with a laser or other suitable light source configured to emit a signal (e.g., a series of pulses) to be detected via a receiver device. A receiver device can therefore be equipped with a detector such as a photodiode or other suitable component configured to detect incoming optical signals. By comparing the time that the signal(s) are received with the time of transmission, a time-of-flight calculation can be performed to obtain a spatial measurement parameter, for example an absolute distance between the transmitter device and the receiver device. Additionally or alternatively, two-way ranging can be performed in which the receiver devices emits an optical signal (e.g., a laser pulse) back to the initial transmitter device, with the time-of-flight calculated based on the total time elapsed. In various examples, some or all of the devices within the environment can be equipped with both an optical transmitter and an optical receiver, such that each device can both transmit and receive optical localization signals. In some instances, a receiver device can be configured to reflect incoming optical signals back to the transmitter device, which can receive the reflected signal and calculate the time-of-flight between transmission and receipt of the reflected signal. This time-of-flight will correspond to the time taken to traverse double the distance between the two devices, and accordingly can be used to obtain a spatial measurement parameter.

In some implementations, the wireless localization signals can take the form of ultra-wideband (UWB) wireless signals. UWB can be defined as wireless communication with greater than 20% of the center frequency or 500 MHz, and may generally be between about 3.1 and 10.6 GHz. Additional details relating to UWB can be found in IEEE 802.15.4-2020, "IEEE Standard for Low-Rate Wireless Networks," which is hereby incorporated by reference in its entirety. UWB uses short pulses of very low energy radio waves for short-range communication including localization and tracking. UWB techniques for precise localization of devices such as smartphones and other smart devices are known in the art. In operation, a transmitter device and a receiver device can each have a wireless antenna configured to transmit and receive, respectively, UWB signals and to calculate a time-of-flight between transmission and reception. In various examples, some or all of the devices within the environment can be configured to both transmit and receive UWB signals, such that each device can both transmit and receive UWB localization signals.

Another localization technique involves using WI-FI signals, in which case a received signal strength indicator (RSSI) value as measured at the receiver device can provide an indication of distance from the transmitter device. In certain embodiments, signals are transmitted when each device (e.g., network players, NMDs, etc.) performs a wireless (e.g., WI-FI) scan. Wireless scans in accordance with numerous embodiments can include broadcasting a first wireless signal that causes other wireless devices to respond with a second signal. In a number of embodiments, wireless radios in each device can provide, as a result of a wireless scan, signal information, which can include (but is not limited to) an indication of which devices responded, an indication of how long ago the scan was performed/how long ago a device responded, and/or received signal strength indicator (RSSI) values associated with the response from a particular device. Signal information in accordance with certain embodiments is gathered in pairs between all of the devices.

In yet another example, sound signals can be used to localize devices within an environment. For example, a first device can emit a signature sound signal that can be detected by a microphone of a second device. The sound signal can be audible or inaudible (e.g., ultrasonic). If the transmitter and receiver devices are synchronized, a time-of-flight can be calculated between the transmission and receipt of the sound signal. Based on an estimated speed of sound in the environment, a distance measurement can therefore be obtained. In various examples, some or all of the devices within the environment can be configured to both transmit and receive sound localization signals.

As noted previously, the encoding module 450 can utilize one or more compression schemes to generate the first, second, and nth audio streams for transmission to the satellite playback devices 410b-d. In various examples, the compression scheme can vary over time and/or between the different output streams (e.g., using a first compression scheme to generate the first audio stream, and a second, different, compression scheme to generate the second audio stream). As such, the encoding module 450 can select and/or adjust the particular compression scheme(s) used to generate the output audio streams based at least in part on the particular input parameter(s) 470. By utilizing one or more compression schemes, the encoding module 450 can generate output streams in which the amount of information used to represent the uncompressed data is reduced. This allows for a lower transmission bandwidth of the output audio streams as compared to uncompressed audio data.

In some implementations, the encoding module 450 can utilize lossless compression techniques and/or lossy compression techniques. Examples of lossless compression techniques include ALAC, FLAC, WAV, WMA Lossless, and/or any other lossless compression technique that is suitable for multichannel audio data. Examples of lossy compression techniques include SBC, LC3/LC3plus, AAC, perceptual audio encoding, spatial audio encoding, joint object coding, joint channel coding, or any other lossy compression technique that is suitable for multichannel audio data. In some examples, at least some of the output audio transmitted from the primary playback device 410a to one or more of the satellite playback devices 410b-d can be uncompressed (e.g., encoded via pulse code modulation (PCM)).

In at least some examples, while utilizing a particular compression technique, the degree of data compression (or "compression power") can be modified. For example, under a first compression scheme, the compression ratio may be 5 (i.e., the uncompressed data size is 5 times larger than the uncompressed data size), while under a second compression scheme, the compression ratio may be 2 (i.e., the uncompressed data size is 2 times larger than the uncompressed data size). In some instances, a larger compression ratio may involve more lossy compression and lower audio quality, while providing a significantly smaller data size. As such, depending on network capacity or other parameters, the encoding module 450 may vary the compression power over time to provide the highest quality audio possible while limiting data amounts to levels that can be transmitted wirelessly without introducing latency or network congestion.

This approach can be particularly useful in the context of home theatre audio with multiple discrete playback devices that are distributed about an environment. This is because a particular playback device (e.g., positioned at a rear surround location) may play back multiple surround channels (e.g., left side, left rear, and left top surround), exhibiting, more often than not, a high degree of correlation amongst them. This correlation can be due at least in part to the spatial proximity of the channels to one another within the room. Higher correlation allows for higher compression power while maintaining signal fidelity, which can facilitate increasing the number of channels delivered wirelessly to the satellite playback devices without exceeding the bandwidth capacity of the network.

However, the home theatre context presents additional challenges because the audio content must be substantially lip synchronized to the video content being played back by an associated display device. If the encoding and decoding process is too slow, it will introduce a perceptible latency in which the audio content appears to lag behind the video content. While very low levels of latency are generally not noticeable (e.g., less than about 50 ms), above a threshold time delay the user's experience is degraded due to any introduced latency. Accordingly, in at least some examples, the present technology utilizes suitable compression schemes to maintain low latency while delivering multiple channels wirelessly to a plurality of satellite playback devices.

Optionally, the system may delay playback of the accompanying video content in a manner that compensates for the audio latency due to the compression, decompression, and other audio processing steps. For example, one or more playback devices (e.g. a satellite playback device) may transmit a signal to a home theatre primary playback device (or directly to the display device) that contains or indicates the amount of latency to be compensated for. In response, the video display device can be configured to delay playback of video content by an appropriate amount so that the resulting audio and video content are played back substantially synchronously.

Perceptual latency depends in part on the relative locations of the playback devices with respect to the user. Because rear satellite playback devices may be closer to the user than a front primary playback device (e.g. a soundbar), if all devices transmit signal at precisely the same time, the rear satellite playback device audio would reach the user before the front primary playback device audio. Accordingly, additional latency may be permitted for the rear satellite playback devices without introducing an overall perceptual latency. In various examples, the encoding schemes utilized may vary for different devices depending on their location within the listening layout. For example, given four identical satellite playback devices, two front and two rear, the audio content transmitted to the front-stage playback devices may utilize a different compression scheme (e.g., with lower compression ratio and therefore higher data rate) than the rear playback devices.

With continued reference to Figure 4, the satellite playback devices 410b-d each include a respective decoding module 460a-c (collectively "decoding modules 460). These decoding modules 460a-c can each be configured to receive and process the compressed audio streams from the primary playback device 410a so that the received audio can be played back via the satellite playback devices 410b-d. The decoding modules 460 can each be implemented as software, hardware, or any suitable combination thereof. As noted previously, the particular encoding scheme(s) utilized via the encoding module 450 can vary over time or with respect to particular devices. Accordingly, in some examples, the decoding modules 460a-c can vary with respect to one another to accommodate the different encoding schemes by which the first, second, and nth audio streams are encoded.

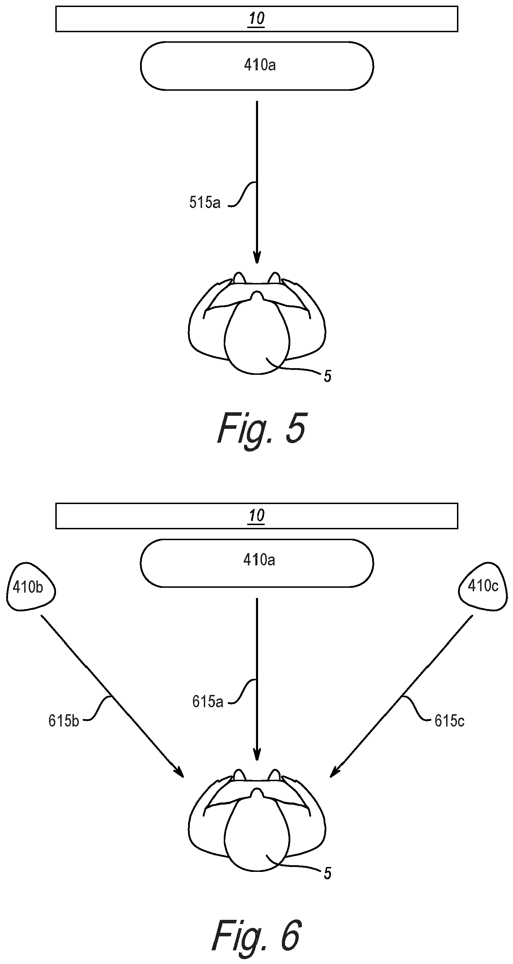

Figure 5 is a schematic overhead view of an audio playback device 410a configured in accordance with examples of the disclosed technology. The playback device 410a shown in Figure 5 is operating in a first operating mode, in which multichannel audio is output via the transducers of the playback device 410a, without synchronous playback via satellite playback devices. In some examples, the playback device 410a may be operably coupled via a wireless or wired connection to a control device 10. As previously described, the control device 10 can correspond to a network device configured to perform functions relevant to facilitating user access, control and/or configuration of a media playback system including the playback device 410a. In some examples, the control device 10 can be a mobile device, a video playback device (e.g., a television), a hub, a dongle, an HDMI adapter, or other structure configured to be operably coupled to the playback device 410a via a network interface. In some examples, the control device 10 may be part of the playback device 410a such that they constitute an integral structure and/or are enclosed within a common housing.

Figure 6 is a schematic overhead view of the primary playback device 410a of Figure 5 grouped with one or more satellite audio playback devices 410b, 410c for synchronous audio playback. The playback device 410a shown in Figure 6 is a primary playback device operating in a second operating mode, in which is it grouped (e.g., bonded) to a first satellite playback device 410b and a second satellite playback device 410c, e.g., via a network interface. The second and third playback devices 410b, 410c may correspond to any playback device described elsewhere herein, and may be identical or different from one another. Additionally or alternatively, the second and third playback devices 410b, 410c may be identical or different from the first playback device 410a.

In the second mode, the primary playback device 410a can provide audio output 615a, the first satellite playback device 410b can provide audio output 615b, and the second satellite playback device 410c can provide audio output 615c. As described above with respect to Figure 5, an encoding module of the primary playback device 410a can receive multichannel audio and generate various output streams. The output streams may be multichannel audio streams that include a subset of the multichannel audio input, and may be tailored for each respective playback device. For example, a first stream can be generated and transmitted to the first satellite playback device 410b, which is played back as audio output 615b, a second stream can be generated and transmitted to the second satellite playback device 410c, which is played back as audio output 615c, and a third stream can be generated and played back as audio output 615a by the primary playback device 410a itself. In various examples, some or all of the output audio streams can be compressed to reduce network congestion and facilitate the use of multichannel audio playback via a number of discrete satellite playback devices.

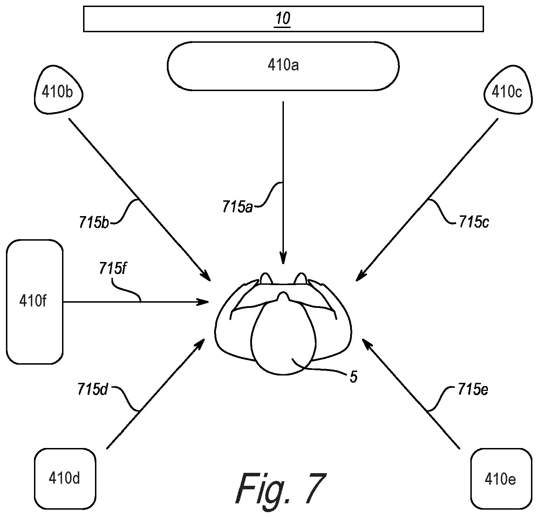

Figure 7 is another schematic overhead view of the primary playback device 410a, the first satellite playback device 410b, and the second satellite playback device 410c shown in Figure 6, and further includes additional satellite playback devices, including a third satellite playback device 410d, a fourth satellite playback device 410e, and a fifth satellite playback device 410f. The third and fourth satellite playback devices 410d, 410e may correspond to any other playback device described elsewhere herein, and may each be identical or different from one another. In some examples, the third and fourth satellite playback devices may constitute "rear" devices (e.g., a rear left surround and a rear right surround). The fifth playback device 410f can be a woofer or similar device configured to provide low or mid-range frequency outputs.

In operation, the third, fourth, and fifth satellite playback devices 410d, 410e, and 410f may be utilized to playback particular subsets of channels of a multichannel audio content received at the first playback device 410a, control device 10, or any of the playback devices, and/or provided therefrom. For example, the third satellite playback device 410d can provide audio output 715d, the fourth satellite playback device 410e can provide audio output 715e, and the fifth satellite playback device 410f can provide audio output 715f. In various examples, some or all of the audio outputs 715a-715f can be multichannel audio, such that discrete satellite playback devices are each outputting multichannel audio. In this configuration, the number of audio channels transmitted wirelessly between the playback devices can grow quite large, thereby necessitating the encoding and transmission techniques described herein to enable wireless transmission and synchronous audio playback of multichannel audio.

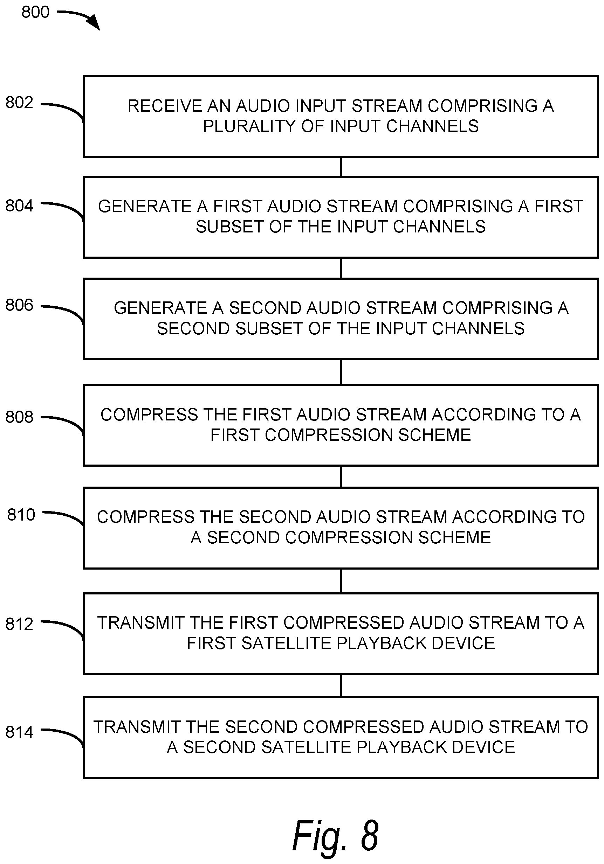

Figure 8 is a flow diagram of an example routine 800 for wireless transmission of multichannel compressed audio content to satellite playback devices in accordance with examples of the disclosed technology. In block 802, routine 800 receives, at a playback device wirelessly coupled to at least a first satellite playback device and a second satellite playback device, an audio input stream comprising a plurality of input channels. As noted above, this input stream can take any suitable form, but may include, for example, spatial audio formats such as Dolby Atmos or DTS:X.

In block 804, routine 800 generates a first audio stream comprising a first subset of the input channels. And in block 806, routine 800 generates a second audio stream comprising a second subset of the input channels. In block 808, routine 800 compresses the first audio stream according to a first compression scheme. And in block 810, routine 800 compresses the second audio stream according to a second compression scheme. In various examples, the compression schemes may be the same or different. As noted previously, the particular compression scheme(s) utilized by the playback device 310 can vary based on a number of input parameters, such as a device location parameter, a listener location parameter, a network condition parameter, an environmental acoustics parameter, an audio content parameter, or any other suitable input parameter. As such, the compression scheme(s) can vary both over time (depending on changing input conditions) and/or across devices (depending on device parameters, such as location, playback capabilities, power levels, etc.).

In block 812, routine 800 transmits, from the playback device to the first satellite playback device, the first compressed audio stream. In block 814, routine 800 transmits, from the playback device to the second satellite playback device, the second compressed audio stream. In addition, the primary playback device can also play back audio generated based on the input audio stream. In operation, the primary playback device and the first and second satellite playback devices can play back their respective audio in synchrony with one another. Although this example depicts three playback devices, in various configurations there may be any number of satellite playback devices in addition to the primary playback device, for example 3, 4, 5, 6, 7, 8, 9, 10 or more satellite playback devices.

### IV. Conclusion

The above discussions relating to playback devices, controller devices, playback zone configurations, and media content sources provide only some examples of operating environments within which functions and methods described below may be implemented. Other operating environments and/or configurations of media playback systems, playback devices, and network devices not explicitly described herein may also be applicable and suitable for implementation of the functions and methods.

The description above discloses, among other things, various example systems, methods, apparatus, and articles of manufacture including, among other components, firmware and/or software executed on hardware. It is understood that such examples are merely illustrative and should not be considered as limiting. For example, it is contemplated that any or all of the firmware, hardware, and/or software examples or components can be embodied exclusively in hardware, exclusively in software, exclusively in firmware, or in any combination of hardware, software, and/or firmware. Accordingly, the examples provided are not the only ways to implement such systems, methods, apparatus, and/or articles of manufacture.

Additionally, references herein to "example" means that a particular feature, structure, or characteristic described in connection with the example can be included in at least one example of an invention. The appearances of this phrase in various places in the specification are not necessarily all referring to the same example, nor are separate or alternative examples mutually exclusive of other examples. As such, the examples described herein, explicitly and implicitly understood by one skilled in the art, can be combined with other examples.

The specification is presented largely in terms of illustrative environments, systems, procedures, steps, logic blocks, processing, and other symbolic representations that directly or indirectly resemble the operations of data processing devices coupled to networks. These process descriptions and representations are typically used by those skilled in the art to most effectively convey the substance of their work to others skilled in the art. Numerous specific details are set forth to provide a thorough understanding of the present disclosure. However, it is understood to those skilled in the art that certain examples of the present disclosure can be practiced without certain, specific details. In other instances, well known methods, procedures, components, and circuitry have not been described in detail to avoid unnecessarily obscuring examples of the examples. Additionally, features described with reference to one of the figures may be combined with and/or replace features described in other individual figures. Accordingly, the scope of the present disclosure is defined by the appended claims rather than the foregoing description of examples.

When any of the appended claims are read to cover a purely software and/or firmware implementation, at least one of the elements in at least one example is hereby expressly defined to include a tangible, non-transitory medium such as a memory, DVD, CD, Blu-ray, and so on, storing the software and/or firmware.

Examples of the disclosed technology are described below as numbered examples (1, 2, 3, etc.) for convenience. These are provided as examples and do not limit the disclosed technology. It is noted that any of the dependent examples may be combined in any combination, and placed into a respective independent example. The other examples can be presented in a similar manner.

Example 1. A playback device comprising: one or more processors; a network interface; and data storage having instructions stored thereon that are executable by the one or more processors to cause the playback device to perform operations comprising: receiving, at the playback device an audio input stream comprising a plurality of input channels, wherein the playback device is wirelessly coupled to at least a first satellite playback device and a second satellite playback device; generating a first audio stream comprising a first subset of the input channels; generating a second audio stream comprising a second subset of the input channels; compressing the first audio stream according to a first compression scheme; compressing the second audio stream according to a second compression scheme; transmitting, from the playback device to the first satellite playback device, the first compressed audio stream; and transmitting, from the playback device to the second satellite playback device, the second compressed audio stream.

Example 2. The playback device of any one of the Examples herein, wherein the operations further comprise: receiving, at the playback device, an input parameter; and after receiving the input parameter, modifying at least the first compression scheme.

Example 3. The playback device of any one of the Examples herein, wherein the input parameter comprises one or more of: a device location parameter, a listener location parameter, a network condition parameter, an environmental acoustics parameter, or an audio content parameter.

Example 4. The playback device of any one of the Examples herein, wherein modifying at least the first compression scheme comprises increasing a compression power of the first compression scheme.

Example 5. The playback device of any one of the Examples herein, wherein the first subset of the input channels and the second set of the input channels differ from one another, the operations further comprising: decompressing, at the first satellite playback device, the first compressed audio stream; playing back, via the first satellite playback device, the first decompressed audio stream; decompressing, at the second satellite playback device, the second compressed audio stream; and playing back, via the second satellite playback device and in synchrony with the first satellite playback device, the second decompressed audio stream.

Example 6. The playback device of any one of the Examples herein, wherein the operations further comprise: generating at least third and fourth audio streams comprising third and fourth subsets, respectively, of the input channels; compressing the third and fourth audio streams according to third and fourth compression schemes, respectively; and transmitting, from the playback device to third and fourth satellite playback devices, the third and fourth compression schemes, respectively, wherein each of the first, second, third, and fourth subsets includes at least four input channels.

Example 7. The playback device of any one of the Examples herein, wherein the first compression scheme and the second compression scheme differ from one another.

Example 8. A method comprising: receiving, at a playback device wirelessly coupled to at least a first satellite playback device and a second satellite playback device, an audio input stream comprising a plurality of input channels; generating a first audio stream comprising a first subset of the input channels; generating a second audio stream comprising a second subset of the input channels; compressing the first audio stream according to a first compression scheme; compressing the second audio stream according to a second compression scheme; transmitting, from the playback device to the first satellite playback device, the first compressed audio stream; and transmitting, from the playback device to the second satellite playback device, the second compressed audio stream.

Example 9. The method of any one of the Examples herein, further comprising: receiving, at the playback device, an input parameter; and after receiving the input parameter, modifying at least the first compression scheme.

Example 10. The method of any one of the Examples herein, wherein the input parameter comprises one or more of: a device location parameter, a listener location parameter, a network condition parameter, an environmental acoustics parameter, or an audio content parameter.

Example 11. The method of any one of the Examples herein, wherein modifying at least the first compression scheme comprises increasing a compression power of the first compression scheme.

Example 12. The method of any one of the Examples herein, wherein the first subset of the input channels and the second set of the input channels differ from one another, the method further comprising: decompressing, at the first satellite playback device, the first compressed audio stream; playing back, via the first satellite playback device, the first decompressed audio stream; decompressing, at the second satellite playback device, the second compressed audio stream; and playing back, via the second satellite playback device and in synchrony with the first satellite playback device, the second decompressed audio stream.

Example 13. The method of any one of the Examples herein, further comprising: generating at least third and fourth audio streams comprising third and fourth subsets, respectively, of the input channels; compressing the third and fourth audio streams according to third and fourth compression schemes, respectively; and transmitting, from the playback device to third and fourth satellite playback devices, the third and fourth compression schemes, respectively, wherein each of the first, second, third, and fourth subsets includes at least four input channels.

Example 14. The method of any one of the Examples herein, wherein the first compression scheme and the second compression scheme differ from one another.

Example 15. One or more tangible, non-transitory, computer-readable media storing instructions that, when executed by one or more processors of a playback device, cause the playback device to perform operations comprising: receiving, at the playback device, an audio input stream comprising a plurality of input channels, wherein the playback device is wirelessly coupled to at least a first satellite playback device and a second satellite playback device; generating a first audio stream comprising a first subset of the input channels; generating a second audio stream comprising a second subset of the input channels; compressing the first audio stream according to a first compression scheme; compressing the second audio stream according to a second compression scheme; transmitting, from the playback device to the first satellite playback device, the first compressed audio stream; and transmitting, from the playback device to the second satellite playback device, the second compressed audio stream.

Example 16. The computer-readable media of any one of the Examples herein, wherein the operations further comprise: receiving, at the playback device, an input parameter; and after receiving the input parameter, modifying at least the first compression scheme.

Example 17. The computer-readable media of any one of the Examples herein, wherein the input parameter comprises one or more of: a device location parameter, a listener location parameter, a network condition parameter, an environmental acoustics parameter, or an audio content parameter.

Example 18. The computer-readable media of any one of the Examples herein, wherein modifying at least the first compression scheme comprises increasing a compression power of the first compression scheme.

Example 19. The computer-readable media of any one of the Examples herein, wherein the first subset of the input channels and the second set of the input channels differ from one another, the operations further comprising: decompressing, at the first satellite playback device, the first compressed audio stream; playing back, via the first satellite playback device, the first decompressed audio stream; decompressing, at the second satellite playback device, the second compressed audio stream; and playing back, via the second satellite playback device and in synchrony with the first satellite playback device, the second decompressed audio stream.

Example 20. The computer-readable media of any one of the Examples herein, wherein the operations further comprise: generating at least third and fourth audio streams comprising third and fourth subsets, respectively, of the input channels; compressing the third and fourth audio streams according to third and fourth compression schemes, respectively; and transmitting, from the playback device to third and fourth satellite playback devices, the third and fourth compression schemes, respectively, wherein each of the first, second, third, and fourth subsets includes at least four input channels.

## Claims

1. A method comprising:
receiving, at a playback device wirelessly coupled to at least a first satellite playback device and a second satellite playback device, an audio input stream comprising a plurality of input channels;
generating a first audio stream comprising a first subset of the input channels;
generating a second audio stream comprising a second subset of the input channels;
compressing the first audio stream according to a first compression scheme;
compressing the second audio stream according to a second compression scheme;
transmitting, from the playback device to the first satellite playback device, the first compressed audio stream; and
transmitting, from the playback device to the second satellite playback device, the second compressed audio stream.

2. The method of claim 1, further comprising:
receiving, at the playback device, an input parameter; and
after receiving the input parameter, modifying at least the first compression scheme.

3. The method of claim 2, wherein the input parameter comprises one or more of:
a device location parameter, a listener location parameter, a network condition parameter, an environmental acoustics parameter, or an audio content parameter.

4. The method of claim 2 or 3, wherein modifying at least the first compression scheme comprises increasing a compression power of the first compression scheme.

5. The method of any of the preceding claims, wherein the first subset of the input channels and the second set of the input channels differ from one another, the method further comprising:
decompressing, at the first satellite playback device, the first compressed audio stream;
playing back, via the first satellite playback device, the first decompressed audio stream;
decompressing, at the second satellite playback device, the second compressed audio stream; and
playing back, via the second satellite playback device and in synchrony with the first satellite playback device, the second decompressed audio stream.

6. The method of any of the preceding claims, further comprising:
generating at least third and fourth audio streams comprising third and fourth subsets, respectively, of the input channels;
compressing the third and fourth audio streams according to third and fourth compression schemes, respectively; and
transmitting, from the playback device to third and fourth satellite playback devices, the third and fourth compression schemes, respectively,
wherein each of the first, second, third, and fourth subsets includes at least four input channels.

7. The method of any of the preceding claims, wherein the first compression scheme and the second compression scheme differ from one another.

8. A playback device comprising:
one or more processors;
a network interface; and
data storage having instructions stored thereon that are executable by the one or more processors to cause the playback device to perform the method of any of any of the preceding claims.

9. One or more computer-readable media storing instructions that, when executed by one or more processors of a playback device, cause the playback device to perform the method of any of claims 1 to 7.
